# EUROPÄISCHE PATENTSCHRIFT

(11) **EP 1 806 526 B1**
(45) Veröffentlichungstag und Bekanntmachung des Hinweises auf die Patenterteilung: **17.12.2008**
(21) Anmeldenummer: 06000240.9
(22) Anmeldetag: 07.01.2006
(51) Int. Cl.: F16K 31/06, F16K 1/46

(54) **Elektromagnetventil**
Electromagnetic valve
Soupape électromagnétique

(43) Veröffentlichungstag der Anmeldung: 11.07.2007
(73) Patentinhaber: FESTO AG & Co. KG, 73734 Esslingen (DE)
(72) Erfinder: Bertalan, Barnabas, 2092 Budakeszi (HU); Urban, Jozsef, 1022 Budapest (HU)
(74) Vertreter: Abel, Martin

(56) Entgegenhaltungen:
- EP-A- 0 736 712
- EP-A- 1 213 521
- DE-B- 1 104 783

## Beschreibung

Die Erfindung betrifft ein Magnetventil zur Steuerung eines fluidischen Druckmediums, mit einem Einlasskanal, einem Auslasskanal, einer zwischen den beiden Kanälen angeordneten Überströmkammer, einem Abblaskanal und einem mittels eines Elektromagneten bewegbaren, an einem beweglichen Anker des Elektromagneten angeordneten Ventilglied, das über mindestens eine Schließfläche verfügt, mit der es in seiner Schließstellung an einer den Einlasskanal umschließenden ringförmigen Dichtfläche anliegt, wobei die Schließfläche von der Mantelfläche eines vom Ventilglied wegragenden Verschlusszapfens gebildet ist, der in der Schließstellung in den Einlasskanal eintaucht und dabei umfangsseitig von der nach radial innen weisenden Dichtfläche abdichtend umschlossen ist.

Die DE-AS 1 031 073 beschreibt ein Magnetventil, das über einen Grundkörper mit einem vom Speisedruck beaufschlagten Einlasskanal und einem zu einem Verbraucher führenden Auslasskanal verfügt. An dem Grundkörper ist ein Elektromagnet angeordnet, der in seinem Inneren ein Ventilglied aufweist, das durch eine Rückstell-Feder-Einrichtung in eine Schließstellung vorgespannt ist, in der es axial an einem Ventilsitz anliegt. Um ein Überströmen des fluidischen Druckmediums aus dem Einlasskanal in den Auslasskanal zu ermöglichen, wird das Ventilglied durch Erregung des Elektromagneten in eine Offenstellung umgeschaltet, in der es vom Ventilsitz abhebt und die Überströmkammer freigibt. Die Überströmkammer steht in der Schließstellung des Ventilgliedes über einen Abblaskanal mit der Umgebung in Verbindung.

Das Umschalten in die Offenstellung benötigt bei Magnetventilen meist eine beträchtliche Antriebsenergie, weil das Ventilglied in die Schließstellung vorgespannt ist. Diesem Problem ist man in dem vorgenannten Dokument dadurch begegnet, dass man an dem Ventilglied ein bewegliches Verschlussglied angebracht hat, das erst dann vom Ventilsitz abgehoben wird, wenn das Ventilglied bereits eine Teilstrecke seiner Öffnungsbewegung zurückgelegt hat. Das erfordert aber einen relativ aufwendigen Aufbau des Ventilgliedes und es ist weiterhin viel Antriebsenergie erforderlich, um schnelle Schaltvorgänge zu gewährleisten.

Aus der EP 0 829 668 A1 geht ebenfalls ein Magnetventil geschilderter Art hervor. Um kurze Schaltzeiten auch bei großen Strömungsquerschnitten und somit hohen Durchflusswerten bei geringem Energieverbrauch zu ermöglichen, wird dort ein von einem Steuerdruck beaufschlagtes bewegbares Unterstützungsglied vorgeschlagen, das durch den Arbeitskanal hindurch in Öffnungsrichtung auf das Ventilglied einwirkt. Im Zusammenhang mit dieser Lösung - vergleichbar mit anderen vorbekannten Magnetventilen - wirkt nachteilig, dass der zur Betätigung des Ventilgliedes erforderliche Energieverbrauch unter anderem von den geometrischen Abmessungen des Ventils, von der sich durch ihre Elastizität verändernden Dichtfläche des Dichtsitzes, von der das Ventilglied in Schließstellung beaufschlagenden Federkraft, von der auf den Dichtsitz wirkenden und veränderlichen Staukraft, den Turbulenzen, vom Speisedruck, usw. abhängig ist.

Die Nass Magnet GmbH, Hannover, DE erzeugt und vertreibt ähnlich aufgebaute Magnetventile. Die Ventile aus der Reihe "System 8" aus dem gleichnamigen Katalog dieser Firma enthalten Ventilglieder, die an beiden Enden mit je einer flachen Schließfläche versehen sind. Die Schließflächen sind aus elastischem Material, meist aus Gummi gefertigt und werden in der jeweiligen Schließstellung des Ventilgliedes gegen den axial orientierten Ventilsitz des Einlasskanals bzw. des Abblaskanals gepresst, um den Strömungsquerschnitt des jeweiligen Kanals vollständig abzuschließen. Dieser Vorgang soll auch bei hohem Speisedruck rasch und zuverlässig verlaufen, was aber nur mittels einer dem Ventilglied zugeordneten kräftigen Rückstellfeder gesichert werden kann. Um die Dichtungsflächen vor Beschädigung zu schützen, wird ein aus sechs Teilen bestehender komplizierter Anker verwendet, der durch Doppelfederung vorgespannte und mittels Rohrfederteller getrennte Dichtungselemente aufweist. Um die Federkraft zu überwinden und kurze Schaltzeiten zu gewährleisten, wird eine hohe Energie zur Erregung des Magneten benötigt und die Spule des Elektromagneten überdimensioniert. Ein weiterer Nachteil ergibt sich ebenfalls aus der erläuterten Konstruktion, da die Kraft der das Ventilglied in Schließstellung beaufschlagende Rückstellfeder nur in Grenzen erhöht werden kann, wodurch auch der Höchstwert des noch verwaltbaren Speisedruckes begrenzt ist.

Ein Magnetventil der eingangs genannten Art geht aus der DE 1 104 783 B hervor. Dort wird das aus dem Einlasskanal ausströmende fluidische Druckmedium nicht am äusseren Rand eines axial orientierten Ventilsitzes mittels eines flachen Dichtelementes zurückgehalten, sondern im Inneren des Einlasskanals, mittels einem in den Endbereich des Einlasskanals eingeführten Verschlusszapfen.

Es ist die Aufgabe der vorliegenden Erfindung, ein Magnetventil der eingangs genannten Art zu schaffen, das bei geringem und nahezu von den Betriebsparametern unabhängigem Energieverbrauch kurze Schaltzeiten und ferner eine lange Lebensdauer für die Dichtungen ermöglicht, und das gleichwohl gewährleisten kann, dass der Einlasskanal mit Sicherheit abgeschlossen wird.

Zur Lösung dieser Aufgabe ist vorgesehen, dass der bewegliche Anker rohrförmig ausgebildet ist, wobei das Ventilglied in den beweglichen Anker eingesteckt und axial unbeweglich an dem beweglichen Anker fixiert ist.

Bei dem erfindungsgemäßen Magnetventil ist sichergestellt, dass eine niedrige Kraft zum abgedichteten Abschließen des Einlasskanals benötigt wird, da die Kraft des unter Speisedruck stehenden fluidischen Druckmediums nicht axial gegen ein verhältnismäßig großes, einen axialen Ventilsitz abdekkendes scheibenförmiges Dichtelement, sondern nur auf eine verhältnismäßig kleine Stirnseite des Ventilzapfens einwirkt, und die Dichtstelle zwischen der Mantelfläche des Verschlusszapfens und der Innenwand des Einlasskanals, also radial, zustande kommt. Zum Schließen des Ventils genügt also eine relativ geringe Stellkraft und mithin gegebenenfalls eine kleindimensionierte Rückstellfeder, so dass der zum Öffnen erforderliche Elektromagnet mit kleinen Abmessungen und kleiner Leistungsaufnahme ausgebildet werden kann und auch nur wenig Wärme entwickelt. Außerdem kann man mit ein und demselben kleindimensionierten Elektromagnet einen Speisedruck mit hoher Bandbreite bewältigen. Somit können Magnetventile, auch wenn sie für unterschiedliche Drücke eingesetzt werden, stets mit dem gleichen Elektromagnet ausgestattet sein, was eine Verringerung der Bauteileanzahl und der Herstellungskosten zur Folge hat. Von Vorteil ist es, dass der bewegliche Anker rohrförmig ausgebildet und das Ventilglied in den rohrförmigen beweglichen Anker eingesteckt ist. Das Ventilglied ist dabei axial unbeweglich mit dem beweglichen Anker verbunden.

Vorteilhafte Weiterbildungen der Erfindung gehen aus den Unteransprüchen hervor.

Es ist vorteilhaft, wenn ein mit dem Verschlusszapfen zusammenwirkendes elastisches Dichtungselement zur Definition der Dichtfläche eingesetzt ist. Bei entsprechender Ausgestaltung kann dann die elastische Dichtung vom unter Speisedruck stehenden fluidischen Druckmedium beaufschlagt und in radialer Richtung verstärkt gegen die Mantelfläche des Verschlusszapfens gedrückt werden, wodurch die Dichtwirkung unterstützt wird.

Das elastische Dichtungselement ist zweckmäßigerweise durch einen Dichtungsring gebildet, der den Stirnbereich des Verschlusszapfens aufgrund seiner in der Regel abgerundeten Formgebung in den Einlasskanal einführt. Damit verbunden ist ein selbstzentrierender Effekt. Bei dem Dichtungsring handelt es sich insbesondere um einen O-Ring. Auch ein speziell gestaltetes Dichtungselement kann zum Einsatz kommen.

Es ist vorteilhaft und vereinfacht die Herstellung, wenn der Verschlusszapfen integraler Bestandteil des Ventilgliedes ist.

Unter Umständen ist auch vorteilhaft, wenn der Verschlusszapfen des Ventilgliedes aus einem vom restlichen Ventilglied unterschiedlichen Material ausgebildet ist, z. B. bei Förderung bestimmter Druckmedien.

Zweckmäßigerweise besitzt das Ventilglied längliche Gestalt und ist im rohrförmigen Inneren des Elektromagnets ungehindert axial bewegbar und auch verdrehbar angeordnet, was zu einem gleichmäßigen Verschleiß der Einzelteile führt. Der Endbereich des Verschlusszapfens kann in solchem Fall sich verjüngend ausgebildet werden, beispielsweise abgerundet, konisch oder kegelförmig spitz zulaufend, wodurch seine leichte und sichere Einführung in den Ventilsitz gewährleistet wird.

Es ist vorteilhaft, wenn der Dichtfläche ein sich axial zum Ventilglied hin erweiternder Einführabschnitt für den Ventilzapfen vorgeordnet ist, beispielsweise gebildet von der Wölbung der Außenfläche eines die Dichtfläche bildenden O-Ringes.

In Verbindung mit einem Ventilglied, das beim Umschalten eine lineare Bewegung ausführt, ist es vorteilhaft, wenn der Verschlusszapfen stirnseitig am Ventilglied angeordnet ist und von dort axial wegragt.

Es ist zweckmäßig, das Absperren und Freigeben des Abblaskanals durch vergleichbare Maßnahmen wie beim Einlasskanal durchzuführen. In einem solchen Fall verfügt das Ventilglied über einen dem Abblaskanal zugeordneten weiteren Verschlusszapfen, dessen radiale Mantelfläche eine weitere Schließfläche bildet und der in der Offenstellung des Ventilgliedes, also bei freigegebenem Einlasskanal, so in den Abblaskanal eintaucht, dass er umfangseitig von einer den Abblaskanal umschließenden ringförmigen weiteren Dichtfläche unter Abdichtung umschlossen ist. Somit findet auch beim Abblaskanal keine axiale, sondern eine radiale Abdichtung statt.

Bei einem eine lineare Umschaltbewegung ausführenden Ventilglied sind die beiden Verschlusszapfen zweckmäßigerweise an den beiden einander axial entgegengesetzten Stirnseiten des Ventilgliedes angeordnet.

Vorzugsweise besteht das Ventilglied aus Kunststoffmaterial. Es ist mit dem beweglichen Anker zweckmäßigerweise durch eine Rastverbindung verbunden. Bevorzugt ist es koaxial in den rohrförmigen Anker eingesteckt.

Zweckmäßigerweise verfügt das Magnetventil über einen das Ventilglied in der Richtung der Schließstellung beaufschlagenden Energiespeicher, der im einfachen Fall durch eine Feder gebildet ist. Die Feder ist vorteilhaft eine konzentrisch am Ventilglied angeordnete Schraubenfeder. Es ist natürlich nicht ausgeschlossen, dass die durch die Feder ausgeübte Kraft durch entsprechend polarisierte Erregung des Elektromagneten verstärkt und dadurch der Abschließvorgang gefördert wird.

Zweckmäßigerweise ist das Ventilglied selbstzentrierend angeordnet, wodurch der zur Betätigung erforderliche Kraftaufwand vermindert wird.

Die Selbstzentrierung wird beispielsweise dadurch erreicht, dass das Ventilglied mit radialem Spiel linear verschiebbar gelagert ist, sodass es sich selbsttätig ausrichten kann, wenn es mit seinem Verschlusszapfen in die zugeordnete Dichtfläche des Einlasskanals und/oder des Abblaskanals einfädelt.

Die Erfindung wird nachfolgend anhand der beiliegenden Zeichnung näher erläutert. Es zeigt
- Figur 1: eine mögliche Ausführungsform des erfindungsgemäßen Magnetventils im Längsschnitt, wobei das Ventilglied die Schließstellung einnimmt, und
- Figur 2: einen vergrößerten Ausschnitt des Magnetventils der Figur 1 in der durch den Elektromagnet hervorgerufenen Offenstellung des Ventilgliedes.

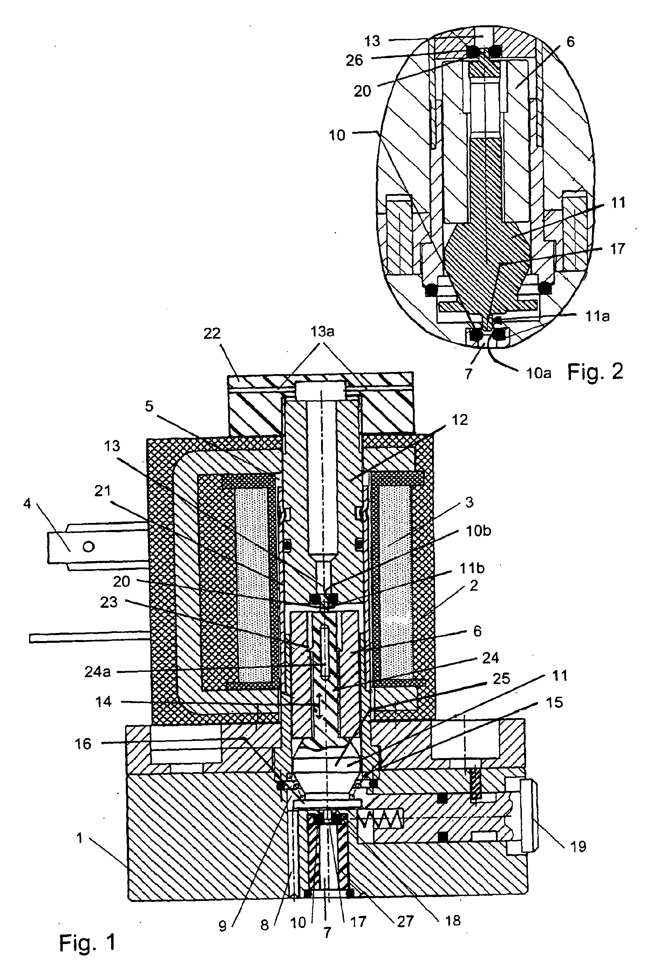

Ein in der Figuren 1 und 2 abgebildetes Magnetventil verfügt über einen Grundkörper 1, an dem ein Elektromagnet 2 meistens lösbar befestigt ist. Der Elektromagnet 2 verfügt über eine Spule 3, der über Anschlüsse 4 die erforderliche elektrische Energie zur Erregung des Magneten zugeführt wird. Im Inneren der Spule 3 ist eine rohrförmige Ankeraufnahme 5 ausgebildet, ferner ein aus zwei Teilen zusammengesetzter Anker 6, 12 angeordnet. Ein Teil 12 des Ankers ist fest, der andere Teil 6 des Ankers ist in Längsrichtung beweglich angebracht, wobei die Längsachsen der beiden Teile 12, 6 zusammenfallen. Der bewegliche Anker 6 taucht mit einer Teillänge in die Ankeraufnahme 5 ein und kann so durch die Spule 3 erregt werden.

In dem Grundkörper 1 sind ein Einlasskanal 7 und ein Auslasskanal 8 ausgebildet, die an der Außenseite des Grundkörpers 1 münden. Der Einlasskanal 7 ist in einer bekannten Weise mit einer nicht dargestellten Druckmittelquelle verbunden, die unter Druck stehendes fluidisches Druckmedium, in diesem Fall Druckluft liefert. Der Auslasskanal 8 ist in einer bekannten Weise mit einer nicht dargestellten Verbraucherstelle verbunden. Der Einlasskanal 7 und der Auslasskanal 8 stehen im Innern des Grundkörpers 1 über eine Überströmkammer 9 in Verbindung.

Die Mündung des Einlasskanals 7 ist von einer ringförmigen Dichtfläche 10a umgeben, die zweckmäßigerweise von der nach radial innen weisenden Innenumfangsfläche eines in die Mündung des Einlasskanals 7 eingesetzten ringförmigen Dichtungselementes 10, insbesondere eines O-Ringes gebildet ist.

In die Überströmkammer 9 ragt ein Ventilglied 11 hinein, das in der dargestellten Ausführungsform mit dem beweglichen Anker 6 fest verbunden ist.

Im Inneren des unbeweglichen Ankers 12 ist ein mit der Überströmkammer 9 in Verbindung stehender Abblaskanal 13 in der Längsrichtung des unbeweglichen Ankers 12 ausgebildet. Die Überströmkammer 9 kann, z.B. am Außenumfang des beweglichen Ankers 6 vorbei, mit dem Abblaskanal 13 in Verbindung stehen. In diesem Zusammenhang ist der bewegliche Anker 6 zweckmäßigerweise mit radialem Spiel in einem Führungsrohr 21 axial verschiebbar gelagert, wobei das Führungsrohr 21 einenends am Grundkörper 1 unter Abdichtung befestigt ist und andernends, wiederum unter Abdichtung, den feststehenden Anker 12 trägt.

Der Elektromagnet 2 ist mit seiner Ankeraufnahme 5 auf das Führungsrohr 21 aufgesteckt und beispielsweise durch eine auf den überstehenden Endabschnitt des feststehenden Ankers 12 aufgeschraubte Befestigungsmutter 22 am Grundkörper 1 gehalten. Diese Befestigungsmutter 22 ist beim Ausführungsbeispiels kappenartig ausgebildet und ist von mindestens einem Kanal 13a durchsetzt, der die Verbindung zwischen dem Abblaskanal 13 und der Umgebung herstellt. Ist die Befestigungsmutter 22 alternativ als einfache Mutter ausgebildet, die die Stirnseite des feststehenden Ankers 12 nicht bedeckt, kann der Abblaskanal 13 unmittelbar ins Freie münden.

Das Ventilglied 11 kann in einer durch Doppelpfeil 14 gezeigten linearen - in der Figur vertikalen - Bewegungsrichtung zwischen einer in Figur 1 sichtbaren Schließstellung und einer in Figur 2 dargestellten Offenstellung mit Hilfe des Elektromagneten 2 umgeschaltet werden. Die Stellkraft des Elektromagneten 2 wird dabei über den beweglichen Anker 6 auf das Ventilglied 11 übertragen, welches Letztere in der Umschaltrichtung 14 mit dem beweglichen Anker 6 bewegungsgekoppelt ist.

Bevorzugt ist der bewegliche Anker 6 rohrförmig ausgebildet, und das Ventilglied 11 ist zweckmäßigerweise koaxial in den rohrförmigen beweglichen Anker 6 eingesteckt. Durch Rastverbindungsmittel 23 ist das Ventilglied 11 axial unbeweglich mit dem beweglichen Anker 6 verrastet.

Das Ventilglied 11 besteht zweckmäßigerweise aus Kunststoffmaterial. Es greift beim Ausführungsbeispiel mit einem Befestigungsschaft 24 koaxial in den beweglichen Anker 6 hinein. Der Befestigungsschaft 24 ist bei 24a längsgeschlitzt, sodass sich zwei rechtwinklig zur Umschaltrichtung 14 elastisch verformbare Schenkel ergeben, die jeweils Rastvorsprünge tragen, die einen Absatz am Innenumfang des beweglichen Ankers 6 radial hintergreifen können.

An der dem Einlasskanal 7 zugewandten Stirnseite besitzt das Ventilglied 11 einen Kopf 25, der sich unter der Wirkung der Rastverbindungsmittel 23 an der zugewandten Stirnfläche des beweglichen Ankers 6 abstützt. Somit bilden das Ventilglied 11 und der bewegliche Anker 6 eine nur gemeinsam bewegbare Baueinheit.

Das Ventilglied 11 liegt der Mündung des Einlasskanals 7 gegenüber und sitzt in der Schließstellung mit einer Stirnseite seines kopfförmigen Endbereiches, infolge einer einwirkenden Rückstellfeder 15 oder einem anderen Energiespeicher, axial auf dem Grundkörper 1 auf. Die das Ventilglied 11 koaxial umschließende Rückstellfeder 15 spannt das Ventilglied 11 ständig in Schließrichtung vor und stützt sich zum Beispiel zwischen einem ringförmigen Radialvorsprung 16 des Ventilgliedes 11 und einem Gehäuseteil, z.B. dem Führungsrohr 21 ab.

Das Ventilglied 11 weist stirnseitig einen zentralen, zapfenförmigen Ansatz auf, der als Verschlusszapfen 17 bezeichnet sei und der in der Schließstellung des Ventilgliedes 11 koaxial in den Einlasskanal 7 hineinragt. Der sich an die Mündung anschließende Endbereich des Einlasskanals 7 ist als ringförmige, nach radial innen weisende Dichtfläche 10a ausgebildet, die den in der Schließstellung eingesteckten Verschlusszapfen 17 am Außenumfang unter Dichtkontakt konzentrisch umschließt. Die gehäusefeste Dichtfläche 10a liegt dabei an der radial nach außen weisenden Mantelfläche des Verschlusszapfens 17 an, die eine Schließfläche 11a bildet.

Zweckmäßigerweise ist die Dichtfläche 10a von einem elastischen und vorzugsweise gummielastischen Dichtungselement 10 gebildet, das ringförmig konfiguriert und im Endabschnitt des Einlasskanals 7 gehalten ist. Wie insbesondere aus Figur 2 ersichtlich ist, kann das ringförmige Dichtungselement 10 in einer nutförmigen Aussparung 18 bezüglich dem Grundkörper 1 ortsfest gehalten sein.

Die Aussparung 18 für das ringförmige Dichtungselement 10 hat bevorzugt die Gestalt einer Ringnut. Diese Ringnut ist zum einen gebildet vom Grundkörper 1 und zum anderen von einem zweckmäßigerweise aus Kunststoffmaterial bestehenden rohrförmigen Halteelement 27, das in den Einlasskanal 7 eingesteckt ist. Dadurch wird auch die Montage des Dichtungselementes 10 vereinfacht.

Das Dichtungselement 10 kann z.B. aus einem O-Ring oder einer scheibenförmigen, gelochten Dichtung bestehen. Der innere Durchmesser des Dichtungselementes 10, der die Dichtfläche 10a bildet, ist so bemessen, dass der Verschlusszapfen 17 des Ventilgliedes 11 ohne Schwierigkeiten, mit niedriger Reibung, durchdringen kann.

Bei in die ringförmige Dichtfläche 10a eingetauchtem Verschlusszapfen 17 ist die Verbindung zwischen dem Einlasskanal 7 und der Überströmkammer 9 durch eine radial wirkende Abdichtungskonfiguration abgesperrt. Es liegt die Schließstellung des Ventilgliedes 11 vor.

Das fluiddichte Absperren der Verbindung kann dadurch unterstützt werden, dass das unter Speisedruck stehende fluidische Druckmedium - hier: die Druckluft - das Dichtungselement 10 deformiert und ringsherum in die umlaufende Aussparung 18 sowie radial gegen die Mantelfläche des Verschlusszapfens 17 des Ventilgliedes 11 presst: je höher der Speisedruck, desto höher der Anpressdruck.

Der bevorzugt runde Querschnitt des Dichtungselementes 10 sowie die bevorzugt abgerundete Stirnseite des Verschlusszapfens 17 gewährleisten eine sichere Einführung des Verschlusszapfens 17 in die Dichtfläche 10a, wobei sich das Ventilglied 11 aufgrund des gegenüber dem Führungsrohr 21 vorhandenen Radialspiels selbsttätig zentriert. Da das dichte Abschließen sozusagen nach der Hubbewegung des Ventilgliedes 11 erfolgt, ist der Verschleiß niedrig und die Bauteile können kostengünstig aus Kunststoff hergestellt werden. Der im Einlasskanal 7 herrschende Speisedruck beaufschlagt das Ventilglied 11 über die unbedeutend große Stirnfläche des Verschlusszapfens 17, sodass kein hoher Kraftaufwand, d.h. keine starke Rückstellfeder 15 benötigt wird, um das Ventilglied 11 in die Schließstellung umzuschalten und dort zu halten. Folglich braucht die Erregung des Elektromagneten 2 weniger Energie als bisher.

Zum Abschließen des Einlasskanals 7 wird ein Kraftaufwand benötigt, der durch das Produkt aus Verschlusszapfen-Durchmessers und Speisedruck bestimmt ist, das Produkt der Schließkraft des elastischen Dichtungselementes und des Reibungskoeffizienten der Mantelfläche des Verschlusszapfens 17 inbegriffen. Diese Werte verändern sich im Betrieb nicht in solcher Weise, dass die Verhaltensweise des Magnetventils messbar beeinflusst wird.

Durch Erregung der Spule 3 des Elektromagneten 2 wird das Ventilglied 11 in seine Offenstellung umgeschaltet. Das Ventilglied 11 wird von dem aufgebauten Magnetfeld angezogen und in Öffnungsrichtung verlagert, bis es an dem feststehenden Anker 12 zur Anlage gelangt. Dabei wird der Verschlusszapfen 17 axial aus der ringförmigen Dichtfläche 10a herausgezogen. In der Offenstellung des Ventilgliedes 11 ist die Rückstellfeder 15 komprimiert. Sie bewirkt, dass nach erfolgter Deaktivierung der Spule 3 das Ventilglied 11 in die Schließstellung zurückgestellt wird.

Der Abblaskanal 13 ist in der Offenstellung des Ventilgliedes 11 zweckmäßigerweise durch eine ähnliche Anordnung verschlossen, wie sie zum Verschließen des Einlasskanals 7 Verwendung findet. Hierzu ist der Abblaskanal 13 an seinem Endabschnitt mit einer nach radial innen weisenden weiteren Dichtfläche 10b versehen, die an einem weiteren ringförmigen, vorzugsweise von einem O-Ring gebildeten Dichtungselement 26 vorgesehen ist. Das Ventilglied 11 weist an seiner dem Verschlusszapfen 17 axial entgegengesetzten Stirnseite einen weiteren Verschlusszapfen 20 auf, dessen Mantelfläche eine weitere Schließfläche 11b bildet, die von der weiteren Dichtfläche 10b unter Abdichtung umfasst ist, wenn der weitere Verschlusszapfen 20 in den Abblaskanal 13 eingetaucht ist.

In dieser Offenstellung ist die Überströmkammer 9 vom Abblaskanal 13 abgetrennt. Das Druckmedium kann nun durch den nicht mehr von dem Verschlusszapfen 17 verschlossenen Einlasskanal 7 hindurch in die Überströmkammer 9 und von dort in den Auslasskanal 8 übertreten.

Zweckmäßigerweise wird der rohrförmige bewegliche Anker 6 von dem in ihn eingesteckten Ventilglied 11 axial durchgriffen. Der Befestigungsschaft 24 trägt an der dem Kopf 25 entgegengesetzten Stirnseite den weiteren Verschlusszapfen 20, der axial über den beweglichen Anker 6 hinausragt.

Das erfindungsgemäße Magnetventil kann wie üblich auch von Hand betätigt werden. Dafür ist ein federbelastetes Betätigungselement 19 vorgesehen, dessen abgeschrägte Gleitfläche sich in der unmittelbaren Nähe des Ventilgliedes 11 erstreckt. Wird das im Grundkörper 1 bewegbar eingesetzte Betätigungselement 19 quer zur Längsachse des Ventilgliedes 11 gedrückt, drängt die abgeschrägte Gleitfläche das Ventilglied 11 nach oben, Richtung Offenstellung und die Mündung des Einlasskanals 7 wird freigegeben.

Das erfindungsgemäße Magnetventil kann innerhalb des in den nachfolgenden Patentansprüchen definierten Schutzumfanges in vielen Ausführungsformen mit verschiedenen Arten von Ventilen zusammengebaut werden. Ein bevorzugter Anwendungsfall ist der Einsatz als Vorsteuerventil für ein Hauptventil, beispielsweise in Verbindung mit einem Einschaltventil bei sogenannten Wartungsgeräten, die zur Aufbereitung von Druckluft eingesetzt werden.

## Patentansprüche

1. Elektromagnetisch betätigbares Magnetventil zur Steuerung eines fluidischen Druckmediums, mit einem Einlasskanal (7), einem Auslasskanal (8), einer zwischen dem Einlasskanal (7) und dem Auslasskanal (8) angeordneten Überströmkammer (9), einem Abblaskanal (13), und einem mittels eines Elektromagneten (2) bewegbaren, an einem beweglichen Anker (6) des Elektromagneten (2) angeordneten Ventilglied (11), das über mindestens eine Schließfläche (11a) verfügt, mit der es in seiner Schließstellung an einer den Einlasskanal (7) umschließenden ringförmigen Dichtfläche (10a) anliegt, wobei die Schließfläche (11a von der Mantelfläche eines vom Ventilglied (11) wegragenden Verschlusszapfens (17) gebildet ist, der in der Schließstellung in den Einlasskanal (7) eintaucht und dabei umfangsseitig von der nach radial innen weisenden Dichtfläche (10a) abdichtend umschlossen ist, **dadurch gekennzeichnet, dass** der bewegliche Anker (6) rohrförmig ausgebildet ist, wobei das Ventilglied (11) in den beweglichen Anker (6) eingesteckt und axial unbeweglich an dem beweglichen Anker (6) fixiert ist.

2. Magnetventil nach Anspruch 1, **dadurch gekennzeichnet, dass** die ringförmige Dichtfläche (10a) durch ein mit der Mantelfläche des Verschlusszapfens (17) zusammenwirkendes elastisches Dichtungselement (10) gebildet ist.

3. Magnetventil nach Anspruch 2, **dadurch gekennzeichnet, dass** das elastische Dichtungselement (10) durch einen Dichtungsring gebildet ist, beispielsweise ein O-Ring.

4. Magnetventil nach einem der Ansprüche 1 bis 3, **dadurch gekennzeichnet, dass** der Verschlusszapfen (17) ein einstückiger Bestandteil des Ventilgliedes (11) ist.

5. Magnetventil nach einem der Ansprüche 1 bis 3, **dadurch gekennzeichnet, dass** der Verschlusszapfen (17) aus einem vom restlichen Bestandteil des Ventilgliedes (11) unterschiedlichen Material ausgebildet ist.

6. Magnetventil nach einem der Ansprüche 1 bis 5, **dadurch gekennzeichnet, dass** das Ventilglied (11) längliche Gestalt besitzt und beim Umschalten eine axial gerichtete Umschaltbewegung (14) ausführt.

7. Magnetventil nach einem der Ansprüche 1 bis 6, **dadurch gekennzeichnet, dass** der Verschlusszapfen (17) eine im Wesentlichen zylindrische Gestalt besitzt.

8. Magnetventil nach einem der Ansprüche 1 bis 7, **dadurch gekennzeichnet, dass** der Endbereich des Verschlusszapfens (17) sich verjüngend ausgebildet ist, beispielsweise abgerundet, konisch oder kegelförmig spitz zulaufend.

9. Magnetventil nach einem der Ansprüche 1 bis 8, **dadurch gekennzeichnet, dass** der Verschlusszapfen (17) sich konisch verjüngend ausgebildet ist.

10. Magnetventil nach einem der Ansprüche 1 bis 9, **dadurch gekennzeichnet, dass** der Verschlusszapfen (17) stirnseitig axial vom Ventilglied (11) wegragt.

11. Magnetventil nach einem der Ansprüche 1 bis 10, **dadurch gekennzeichnet, dass** der ringförmigen Dichtfläche (10a) ein sich zum Ventilglied (11) hin im Durchmesser erweiternder Einführabschnitt für den Ventilzapfen (17) vorgelagert ist.

12. Magnetventil nach einem der Ansprüche 1 bis 11, **dadurch gekennzeichnet, dass** es einen weiteren Verschlusszapfen (20) aufweist, dessen Mantelfläche eine weitere Schließfläche (11b) bildet und der in der Offenstellung des ventilgliedes (11) in den Abblaskanal (13) eintaucht, wobei er umfangsseitig von einer nach radial innen weisenden, den Abblaskanal (13) umschließenden weiteren Dichtfläche (10b abdichtend umschlossen ist.

13. Magnetventil nach Anspruch 12, **dadurch gekennzeichnet, dass** der weitere Verschlusszapfen (20) mit seiner weiteren Schließfläche (11b) in gleicher Weise wie der dem Einlasskanal (7) zugeordnete Verschlusszapfen (17) ausgebildet ist.

14. Magnetventil nach Anspruch 12 oder 13, **dadurch gekennzeichnet, dass** die weitere Dichtfläche (10b) in gleicher Weise wie die dem Einlasskanal (7) zugeordnete Dichtfläche (10a ausgebildet ist.

15. Magnetventil nach einem der Ansprüche 12 bis 14, **dadurch gekennzeichnet, dass** die beiden Verschlusszapfen (17, 20) an einander axial entgegengesetzten Stirnseiten des Ventilgliedes (11) angeordnet sind, wobei sie zweckmäßigerweise koaxial zueinander ausgerichtet sind.

16. Magnetventil nach einem der Ansprüche 1 bis 15, **dadurch gekennzeichnet, dass** das Ventilglied (11) aus Kunststoffmaterial besteht.

17. Magnetventil nach einem der Ansprüche 1 bis 16, **dadurch gekennzeichnet, dass** das Ventilglied (11) durch Verrastung an dem beweglichen Anker (6) fixiert ist.

18. Magnetventil nach einem der Ansprüche 1 bis 17, **dadurch gekennzeichnet, dass** der bewegliche Anker (6) an beiden Stirnseiten von dem eingesteckten Ventilglied (11) überragt wird.

19. Magnetventil nach einem der Ansprüche 1 bis 18, **dadurch gekennzeichnet, dass** es über einen in der Schließstellung das Ventilglied (11) und dessen Verschlusszapfen (17) in Richtung des Einlasskanals (7) beaufschlagenden Energiespeicher verfügt.

20. Magnetventil nach Anspruch 19, **dadurch gekennzeichnet, dass** eine Rückstellfeder (15) den Energiespeicher bildet.

21. Magnetventil nach Anspruch 20, **dadurch gekennzeichnet, dass** die Rückstellfeder (15) durch eine konzentrisch am Ventilglied (11) angeordnete Schraubenfeder gebildet ist.

22. Magnetventil nach Anspruch 20 oder 21, **dadurch gekennzeichnet, dass** ein der Rückstellfeder(15) zuschaltbarer umpolbarer Elektromagnet (2) einen Teil des Energiespeichers bildet.

23. Magnetventil nach einem der Ansprüche 1 bis 22, **dadurch gekennzeichnet, dass** das Ventilglied (11) mit radialem Spiel in einem Führungsrohr (21) verschiebbar geführt ist und mit seinem Verschlusszapfen (17, 20) selbstzentrierend in den von der zugeordneten Dichtfläche (10a, 10b umschlossenen Kanalabschnitt eintauchen kann.

## Claims

1. Electromagnetically operated solenoid valve for the control of a pressure fluid, with an inlet passage (7), an outlet passage (8), an overflow chamber (9) located between the inlet passage (7) and the outlet passage (8), a blow-off passage (13) and a valve member (11), which is movable by means of a solenoid (2), located on a movable armature (6) of the solenoid (2) and provided with at least one seating face (11a) with which it bears against an annular sealing face (10a) enclosing the inlet passage (7) in its closed position, wherein the seating face (11 a) is represented by the circumferential surface of a plug (17) projecting from the valve member (11), which in the closed position dips into the inlet passage (7) and is surrounded while forming a seal by the radially inward oriented sealing face (10a), **characterised in that** the movable armature (6) is tubular, the valve member (11) being inserted into the movable armature (6) and located on the movable armature in an axially immovable manner.

2. Solenoid valve according to claim 1, **characterised in that** the annular sealing face (10a) is represented by an elastic sealing element (10) acting together with the circumferential surface of the plug (17).

3. Solenoid valve according to claim 2, **characterised in that** the elastic sealing element (10) is represented by a seal, for example an O-ring.

4. Solenoid valve according to any of claims 1 to 3, **characterised in that** the plug (17) is an integral part of the valve member (11).

5. Solenoid valve according to any of claims 1 to 3, **characterised in that** the plug (17) is made of a material which is different from the remaining part of the valve member (11).

6. Solenoid valve according to any of claims 1 to 5, **characterised in that** the valve member (11) has an oblong shape and performs an axially oriented switching movement (14) in the switching process.

7. Solenoid valve according to any of claims 1 to 6, **characterised in that** the plug (17) has a substantially cylindrical shape.

8. Solenoid valve according to any of claims 1 to 7, **characterised in that** the end region of the plug (17) is tapered, for example rounded, conical or conically pointed.

9. Solenoid valve according to any of claims 1 to 8, **characterised in that** the plug (17) is tapered.

10. Solenoid valve according to any of claims 1 to 9, **characterised in that** the plug (17) projects axially from the end face of the valve member (11).

11. Solenoid valve according to any of claims 1 to 10, **characterised in that** an insertion section for the valve plug (17) with a diameter widening towards the valve member (11) is located in front of the annular sealing face (10a).

12. Solenoid valve according to any of claims 1 to 11, **characterised in that** it is provided with a further plug (20), the circumferential surface of which forms another seating face (11 b) and which dips into the blow-off passage (13) in the open position of the valve member (11), being circumferentially surrounded while forming a seal by a radially inward oriented further sealing face (10b) surrounding the blow-off passage (13).

13. Solenoid valve according to claim 12, **characterised in that** the further plug (20) with its further seating face (11 b) is designed in the same way as the plug (17) assigned to the inlet passage (7).

14. Solenoid valve according to claim 12 or 13, **characterised in that** the further sealing face (10b) is designed in the same way as the sealing face (10a) assigned to the inlet passage (7).

15. Solenoid valve according to any of claims 12 to 14, **characterised in that** the two plugs (17, 20) are located on axially opposite end faces of the valve member (11), being expediently aligned coaxially.

16. Solenoid valve according to any of claims 1 to 15, **characterised in that** the valve member (11) is made of a plastic material.

17. Solenoid valve according to any of claims 1 to 16, **characterised in that** the valve member (11) is secured to the movable armature (6) by locking engagement.

18. Solenoid valve according to any of claims 1 to 17, **characterised in that** the inserted valve member (11) projects beyond both end faces of the movable armature (6).

19. Solenoid valve according to any of claims 1 to 18, **characterised in that** it is provided with an energy storage device pressurising the valve member (11) and its plug (17) in the direction of the inlet passage (7) in the closed position.

20. Solenoid valve according to claim 19, **characterised in that** the energy storage device is represented by a return spring (15).

21. Solenoid valve according to claim 20, **characterised in that** the return spring (15) is represented by a coil spring concentrically disposed on the valve member (11).

22. Solenoid valve according to claim 20 or 21, **characterised in that** a solenoid (2) selectable to act on the return spring (15) and capable of reversing polarity forms a part of the energy storage device.

23. Solenoid valve according to any of claims 1 to 22, **characterised in that** the valve member (11) is displaceably and with radial play guided in a guide tube (21) and capable of dipping with its plugs (17, 20) into the passage section surrounded by the associated sealing face (10a, 10b) in a self-centring manner.

## Revendications

1. Soupape magnétique à commande électromagnétique, destinée à commander un milieu fluide sous pression, avec un canal d'admission (7), un canal de sortie (8), une chambre de trop-plein (9) placée entre le canal d'admission (7) et le canal de sortie (8), un canal d'évacuation de gaz (13) et un organe de soupape (11) pouvant être déplacé au moyen d'un électroaimant (2) et placé sur un induit mobile (6) de l'électroaimant (2), organe qui dispose d'au moins une surface de fermeture (11a) par laquelle, dans sa position de fermeture, il s'appuie contre une surface d'étanchéité (10a) annulaire entourant le canal d'admission (7), la surface de fermeture (11a) étant formée par la surface d'enveloppe d'un doigt de fermeture (17) dépassant de l'organe de fermeture (11), doigt qui s'enfonce dans le canal d'admission (7) dans la position de fermeture et est alors entouré de manière hermétique sur sa circonférence par la surface d'étanchéité (10a) tournée radialement vers l'intérieur, **caractérisée en ce que** l'induit mobile (6) est réalisé tubulaire, l'organe de soupape (11) étant enfoncé dans l'induit mobile (6) et étant fixé de manière immobile axialement sur l'induit mobile (6).

2. Soupape magnétique selon la revendication 1, **caractérisée en ce que** la surface d'étanchéité annulaire (10a) est formée par un élément d'étanchéité (10) élastique coopérant avec la surface d'enveloppe du doigt de fermeture (17).

3. Soupape magnétique selon la revendication 2, **caractérisée en ce que** l'élément d'étanchéité élastique (10) est formé par une bague d'étanchéité, par exemple un joint torique.

4. Soupape magnétique selon l'une des revendications 1 à 3, **caractérisée en ce que** le doigt de fermeture (17) fait partie d'un seul tenant de l'organe de soupape (11).

5. Soupape magnétique selon l'une des revendications 1 à 3, **caractérisée en ce que** le doigt de fermeture (17) est constitué d'un matériau différent du reste de l'organe de soupape (11).

6. Soupape magnétique selon l'une des revendications 1 à 5, **caractérisée en ce que** l'organe de soupape (11) possède une forme oblongue et exécute lors de la commutation un mouvement de commutation (14) dirigé axialement.

7. Soupape magnétique selon l'une des revendications 1 à 6, **caractérisée en ce que** le doigt de fermeture (17) possède une forme sensiblement cylindrique.

8. Soupape magnétique selon l'une des revendications 1 à 7, **caractérisée en ce que** la partie d'extrémité du doigt de fermeture (17) est réalisée effilée, par exemple effilée de manière arrondie, conique ou en pointe.

9. Soupape magnétique selon l'une des revendications 1 à 8, **caractérisée en ce que** le doigt de fermeture (17) est réalisé effilé de manière conique.

10. Soupape magnétique selon l'une des revendications 1 à 9, **caractérisée en ce que** le doigt de fermeture (17) dépasse axialement de l'organe de soupape (11) du côté frontal.

11. Soupape magnétique selon l'une des revendications 1 à 10, **caractérisée en ce que** devant la surface d'étanchéité annulaire (10a) est placée, pour le doigt de soupape (17), une section d'introduction dont le diamètre s'élargit en direction de l'organe de soupape (11).

12. Soupape magnétique selon l'une des revendications 1 à 11, **caractérisée en ce qu'**elle présente un autre doigt de fermeture (20) dont la surface d'enveloppe forme une autre surface de fermeture (11 b) et qui s'enfonce dans le canal d'évacuation de gaz (13) dans la position ouverte de l'organe de soupape (11), ce doigt étant entouré de manière hermétique sur la circonférence par une autre surface d'étanchéité (10b) dirigée radialement vers l'intérieur et entourant le canal d'évacuation de gaz (13).

13. Soupape magnétique selon la revendication 12, **caractérisée en ce que** l'autre doigt de fermeture (20) avec son autre surface de fermeture (11 b) est réalisé de la même manière que le doigt de fermeture (17) associé au canal d'admission (7).

14. Soupape magnétique selon la revendication 12 ou 13, **caractérisée en ce que** l'autre surface d'étanchéité (10b) est réalisée de la même manière que la surface d'étanchéité (10a) associée au canal d'admission (7).

15. Soupape magnétique selon l'une des revendications 12 à 14, **caractérisée en ce que** les deux doigts de fermeture (17, 20) sont placés sur des faces frontales axialement oppposées de l'organe de soupape (11), en étant avantageusement disposés coaxialement l'un à l'autre.

16. Soupape magnétique selon l'une des revendications 1 à 15, **caractérisée en ce que** l'organe de soupape (11) est constitué d'une matière synthétique.

17. Soupape magnétique selon l'une des revendications 1 à 16, **caractérisée en ce que** l'organe de soupape (11) est fixé par encliquetage sur l'induit mobile (6).

18. Soupape magnétique selon l'une des revendications 1 à 17, **caractérisée en ce que** l'organe de soupape (11) inséré dépasse sur les deux faces frontales par rapport à l'induit mobile (6).

19. Soupape magnétique selon l'une des revendications 1 à 18, **caractérisée en ce qu'**elle dispose d'un accumulateur d'énergie sollicitant dans la position de fermeture l'organe de soupape (11) et son doigt de fermeture (17) en direction du canal d'admission (7).

20. Soupape magnétique selon la revendication 19, **caractérisée en ce qu'**un ressort de rappel (15) forme l'accumulateur d'énergie.

21. Soupape magnétique selon la revendication 20, **caractérisée en ce que** le ressort de rappel (15) est formé par un ressort hélicoïdal placé de manière concentrique sur l'organe de soupape (11).

22. Soupape magnétique selon la revendication 20 ou 21, **caractérisée en ce qu'**un électroaimant (2) à pôles inversables et pouvant s'ajouter au ressort de rappel (15) forme une partie de l'accumulateur d'énergie.

23. Soupape magnétique selon l'une des revendications 1 à 22, **caractérisée en ce que** l'organe de soupape (11) est guidé en coulissement avec un jeu radial dans un tube de guidage (21) et peut s'enfoncer avec son doigt de fermeture (17, 20) de manière autocentreuse dans la section de canal entourée par la surface d'étanchéité (10a, 10b) associée.
